# EUROPEAN PATENT APPLICATION

(11) **EP 4 801 057 A1**
(43) Date of publication of application: **02.09.2026**
(21) Application number: 24881083.0
(22) Date of filing: 02.07.2024
(51) Int. Cl.: H04Q 11/00

(54) **BANDWIDTH ALLOCATION METHOD, AND COMMUNICATION DEVICE AND STORAGE MEDIUM**

(30) Priority: 27.10.2023 CN 202311424860
(71) Applicant: ZTE CORPORATION, Shenzhen, Guangdong 518057 (CN)
(72) Inventor: ZHANG, Weiliang, Shenzhen, Guangdong 518057 (CN); ZHANG, Haijun, Shenzhen, Guangdong 518057 (CN)
(74) Representative: Carangelo, Pierluigi
(86) International application number: PCT/CN2024/103172
(87) International publication number: WO 2025/086708

(57) **Abstract**

The present application relates to the technical field of communications. Provided are a bandwidth allocation method, and a communication device and a storage medium. The bandwidth allocation method comprises: a main FTTR unit receiving a bandwidth request for a first service that is sent by a sub FTTR unit, and executing a bandwidth-allocation-related operation on the basis of a service attribute of the first service.

## Description

### CROSS-REFERENCE TO RELATED APPLICATIONS

The present application claims priority to Chinese Patent Application No. 202311424860.3, titled "Bandwidth Allocation Method, and Communication Device and Storage Medium," filed with the China National Intellectual Property Administration on October 27, 2023, the entire contents of which are incorporated herein by reference.

### TECHNICAL FIELD

Embodiments of the present disclosure relate to the field of communication technology, and in particular, to a bandwidth allocation method, a communication device, and a storage medium.

### BACKGROUND

With the gradual maturation of the standardization of Fiber To The Room (FTTR) technology, FTTR is entering the phase of large-scale deployment. Similar to Fiber To The Home (FTTH), FTTR adopts a point-to-multipoint network topology, consisting of a master device (Main FTTR Unit, MFU) connected to multiple slave devices (Sub FTTR Unit, SFU) through an Indoor Fiber Distribution Network (IFDN). Additionally, multiple master devices are connected to the FTTH Optical Line Terminal (OLT) via an Optical Distribution Network (ODN).

In current networking applications of existing technologies, FTTR and FTTH are two independent networks, making it difficult to achieve coordination in resource allocation and challenging to realize low-latency or deterministic latency transmission for services.

### SUMMARY

In accordance to a first aspect of the present disclosure, an embodiment provides a bandwidth allocation method, applied to a master device, the method includes: receiving a bandwidth request for a first service sent by a slave device; and performing a bandwidth allocation related operation according to a service attribute of the first service.

In accordance to a second aspect of the present disclosure, an embodiment provides a bandwidth allocation method, applied to a slave device, the method includes: receiving a service packet of a first service sent by a home user device; and sending a bandwidth request associated with a service attribute of the first service to a master device, where the bandwidth request is used to request bandwidth to be allocated to the first service.

In accordance to a third aspect of the present disclosure, an embodiment provides a communication device, which includes: one or more processors; a memory, having one or more programs stored thereon. The one or more programs, when executed by the one or more processors, cause the one or more processors to implement the bandwidth allocation method according to the first aspect, or the bandwidth allocation method according to the second aspect.

In accordance to a fourth aspect of the present disclosure, an embodiment provides a computer-readable storage medium, having a computer program stored thereon. When the program is executed by a processor, the bandwidth allocation method according to the first aspect, or the bandwidth allocation method according to the second aspect is implemented.

### DESCRIPTION OF DRAWINGS

The accompanying drawings are provided to facilitate a further understanding of the technical scheme of the present disclosure, constitute a part of the specification, and together with the embodiments of the present disclosure, serve to explain the technical scheme of the present disclosure, and do not limit the technical scheme of the present disclosure.
FIG. 1 is a schematic diagram of an implementation environment of a bandwidth allocation method provided by an embodiment of the present disclosure;
FIG. 2 is a schematic diagram of an integrated networking architecture of FTTH and FTTR provided by an embodiment of the present disclosure;
FIG. 3 is a schematic diagram of another integrated networking architecture of FTTH and FTTR provided by an embodiment of the present disclosure;
FIG. 4 is a schematic flowchart of a bandwidth allocation method provided by an embodiment of the present disclosure;
FIG. 5a is a schematic diagram of an upstream channel construction provided by an embodiment of the present disclosure;
FIG. 5b is a schematic diagram of another upstream channel construction provided by an embodiment of the present disclosure;
FIG. 6 is a schematic flowchart of a bandwidth allocation method provided by an embodiment of the present disclosure;
FIG. 7 is a schematic flowchart of a bandwidth allocation method provided by an embodiment of the present disclosure;
FIG. 8 is a schematic structural diagram of a communication device provided by an embodiment of the present disclosure.

### DETAILED DESCRIPTION

To make the objectives, technical schemes, and advantages of the present disclosure clearer and more comprehensible, the present disclosure is described in further detail below with reference to the accompanying drawings and embodiments. It should be understood that the specific embodiments described herein are only intended to explain the present disclosure and are not intended to limit the present disclosure.

It should be understood that, in the description of the embodiments of the present disclosure, terms such as "first" and "second" are used only for the purpose of distinguishing technical features and should not be construed as indicating or implying relative importance, or implicitly indicating the quantity of the indicated technical features, or implicitly indicating the sequential relationship of the indicated technical features. "At least one" refers to one or more, and "a plurality of" refers to two or more. "And/or" describes the association relationship between associated objects, indicating that three relationships may exist. For example, A and/or B may indicate the presence of A alone, the presence of both A and B, or the presence of B alone. Here, A and B may be singular or plural. The character "/" generally indicates that the associated objects before and after it are in an "or" relationship. "At least one of the following" and similar expressions refer to any combination of these items, including any combination of singular or plural items. For example, at least one of a, b, and c may represent: a, b, c, a and b, a and c, b and c, or a, b, and c, where a, b, and c may be singular or plural.

Furthermore, the technical features involved in the various embodiments of the present disclosure described below may be combined with each other as long as they do not conflict with one another.

To facilitate understanding of the solutions in the embodiments of the present disclosure and to ensure clarity and conciseness in the description of the following embodiments, a brief introduction of existing technologies is first provided:
Passive Optical Network (PON): A passive optical network refers to an Optical Distribution Network (ODN) between an Optical Line Terminal (OLT) and an Optical Network Unit (ONU), with no active communication devices present. One end of the OLT is connected upward to the upper-layer network, enabling upstream access for the PON. The upper-layer network may be an Internet Protocol (IP) backbone network or a Public Switched Telephone Network (PSTN). The other end of the OLT is connected downward to customer premises equipment via the ODN, enabling downstream transmission for the PON and performing functions such as control, management, and ranging of the customer premises equipment. The customer premises equipment may be an ONU. One end of the customer premises equipment is connected upward to the OLT via the ODN, while the other end is connected downward to other terminal devices, such as computers, landline telephones, etc. The ONU works in conjunction with the OLT to implement Ethernet Layer 2 and Layer 3 functions, providing users with voice, data, and multimedia services. For example, the ONU can select and receive data sent by the OLT; respond to management commands issued by the OLT and make corresponding adjustments; buffer user Ethernet data and transmit it upstream in the transmission window allocated by the OLT; and perform other user management functions.

Fiber To The Home (FTTH): FTTH refers to the direct installation and use of optical fiber from a central point to individual buildings such as residences, apartment complexes, and enterprises, to provide high-speed internet access.

Fiber to the Room (FTTR): FTTR refers to the use of optical fiber for all in-home broadband connections, ensuring that each room can maintain the same network speed as the incoming broadband without degradation. Similar to FTTH, FTTR adopts a point-to-multipoint network topology, where the master device (Main FTTR Unit, MFU) connects multiple slave devices (Sub FTTR Unit, SFU) via the Indoor Fiber Distribution Network (IFDN).

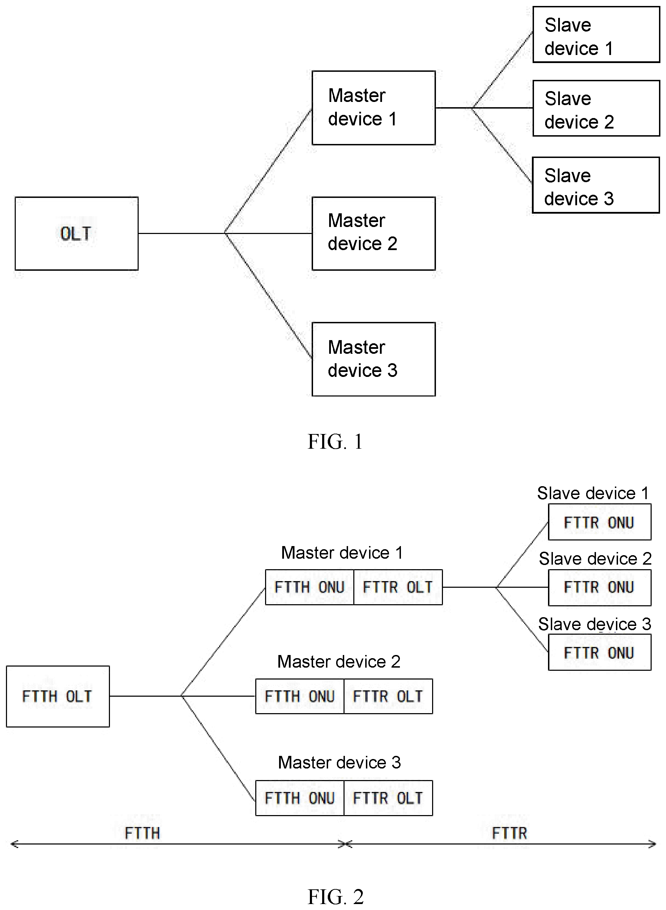

Refer to FIG. 1, which is a schematic diagram of an implementation environment for a bandwidth allocation method provided by an embodiment of the present disclosure. The implementation environment includes an OLT, at least one master device, and at least one slave device. In the example shown in FIG. 1, one OLT is connected to multiple master devices, and each master device is respectively connected to multiple slave devices. Here, the OLT may connect to multiple master devices via the ODN, and the master device may connect to multiple slave devices via the IFDN.

For example, the master device may be connected to one or more home user device, receive service packets sent by the home user device, and forward the service packets. Similarly, the slave device may also be connected to one or more home user device, receive service packets sent by the home user device, and forward the service packets.

In the embodiments of the present disclosure, the service packets sent by the home user device can be categorized, based on their service attribute, into packets for east-west service and packets for north-south traffic.

Here, the east-west service may represent home interconnection service, where the destination address of the east-west service is the address of the home user device, and the packets of the east-west service are forwarded through devices in the FTTR networking to the home user device corresponding to the destination address. For example, the master device receives an east-west service packet from a home user device, then forwards the service packet to the corresponding slave device based on the destination address, and the slave device further forwards the service packet to a home user device corresponding to the destination address; or, Slave device 1 receives an east-west service packet from a home user device, then forwards the service packet to the master device, the master device forwards the service packet to Slave device 2 based on the destination address, and Slave device 2 further forwards the service packet to a home user device corresponding to the destination address.

The north-south traffic may represent access service, which may include Ethernet service, Synchronous Digital Hierarchy (SDH) service, etc. For example, an Ethernet/SDH service packet is first forwarded through devices in the FTTR networking to devices in the FTTH networking, enters the upper-layer device via the FTTH device, thereby achieving service access. For example, the master device receives a north-south service packet from the home user device, then forwards the service packet to the OLT, thereby achieving network access through the OLT; or, a slave device receives a north-south service packet from the home user device, then forwards the service packet to the master device, and the master device further forwards the service packet to the OLT, thereby entering the upper-layer device through the OLT to achieve the service access function.

For example, the home user device may be a handheld device, a wearable device, or a computing device with wireless communication capabilities. The home user device may be a mobile phone, a tablet computer, a smart appliance device, or a computer with wireless transceiver functionality. The home user device may also be a Virtual Reality (VR) terminal device, an Augmented Reality (AR) terminal device, a wired/wireless terminal in industrial control, a wired/wireless terminal in remote healthcare, a wired/wireless terminal in a smart home, a wired/wireless terminal in a smart grid, a wired/wireless terminal in a smart city, and so on.

It should be noted that, in the embodiments of the present disclosure, the transmission direction from the home user device to the OLT is referred to as an upstream direction, and the transmission direction from the OLT to the home user device is referred to as a downstream direction.

In current networking applications of existing technologies, FTTR and FTTH are two independent networks, and resource allocation cannot be coordinated between them. Specifically, east-west services transmitted only within the FTTR segment, and north-south traffic transmitted across both the FTTH and FTTR segments, cannot be coordinated in terms of bandwidth allocation. Moreover, the bandwidth for north-south traffic cannot be coordinated between the FTTH segment and the FTTR segment, making it difficult to achieve low-latency transmission or deterministic latency transmission for services.

Please refer to FIG. 2, which is a schematic diagram of an integrated networking architecture for FTTH and FTTR provided by an embodiment of the present disclosure. As shown in FIG. 2, when FTTH and FTTR are deployed in an integrated networking architecture, the OLT in FIG. 1 serves as the OLT in the FTTH architecture and may be referred to as an FTTH OLT; the master device in FIG. 1 functions as both the ONU in the FTTH architecture and the OLT in the FTTR architecture, and thus can be considered as consisting two modules: the FTTH ONU and the FTTR OLT; the slave device in FIG. 1 serves as the ONU in the FTTR architecture and may be referred to as an FTTR ONU.

To address the issues present in existing technologies, the embodiments of the present disclosure provide a bandwidth allocation method, a communication device, and a computer-readable storage medium, which enable coordinated bandwidth resource allocation between FTTR and FTTH, thereby enhancing the deterministic service capability of the network for services. In the embodiments of the present disclosure, the master device receives a bandwidth request for a first service sent by a slave device, then determines a service attribute of the first service, and performs a bandwidth allocation operation according to the service attribute of the first service. In the embodiments of the present disclosure, by performing corresponding bandwidth allocation operations based on service attributes, the master device coordinates bandwidth resource allocation between FTTR and FTTH, providing support for enhancing the deterministic service capability of the network for services.

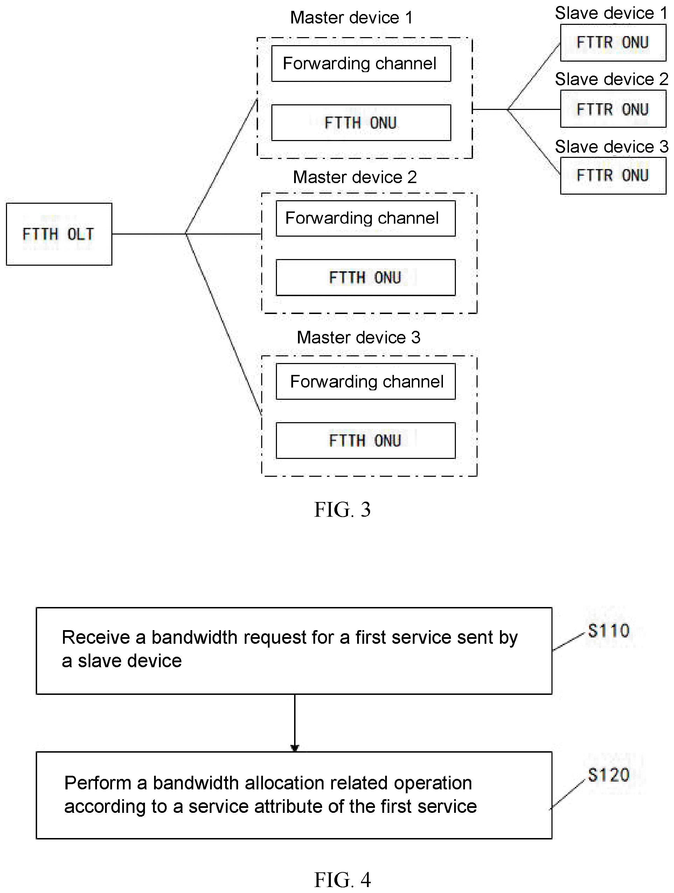

Please refer to FIG. 3, which is a schematic diagram of another integrated networking architecture for FTTH and FTTR provided by an embodiment of the present disclosure. In the example of FIG. 3, the master device includes an FTTH ONU and a forwarding channel, where the forwarding channel is a PON-layer forwarding channel located between the OLT and the slave device. The forwarding channel is used to forward upstream frames from the slave device to the OLT with a constant delay, or to forward downstream frames from the OLT to the slave device with a constant delay. For example, an upstream frame may be an upstream service packet, a bandwidth request, or other upstream messages, and a downstream frame may be a downstream service packet, a bandwidth request response, or other downstream messages.

It should be noted that the constant-delay forwarding described in the embodiments of the present disclosure refers to the consistent time required for an upstream frame/downstream frame from entering the master device to leaving the master device. If the standards of the FTTH and FTTR segments are the same, no standard conversion is required, and forwarding with a constant delay can be performed. If the standards of the FTTH segment and the FTTR segment are different, format conversion of the data frames is required. During the format conversion, if the functionalities of the two segments are inconsistent, it is necessary to delete some content in the segment with more functionalities or add some content in the segment with fewer functionalities.

The forwarding channel provided in the embodiments of the present disclosure can achieve deterministic forwarding of upstream frames/downstream frames, meaning that the forwarding delay of upstream frames/downstream frames by the master device is deterministic. For example, the master device is constrained to complete the forwarding of upstream frames/downstream frames within a first delay.

Please refer to FIG. 4, which is a schematic flowchart of a bandwidth allocation method provided by an embodiment of the present disclosure. The execution entity of the bandwidth allocation method may be the master device in the implementation environment shown in FIG. 1 or FIG. 3. As shown in FIG. 4, the bandwidth allocation method may include, but is not limited to, the following steps S110-S120. Each step is described in sequence below.

Step S110: Receiving a bandwidth request for a first service sent by a slave device.

For example, the slave device receives a connection configuration request for a new service initiated by a home user device. The new service is referred to as the first service. The slave device, in response to the connection configuration request for the first service, sends a bandwidth request to the master device to apply for bandwidth for the first service.

Step S120: Performing a bandwidth allocation related operation according to a service attribute of the first service.

For example, the service attribute of the first service may be an east-west attribute or a north-south attribute.

For example, the service attribute of a service may be distinguished based on whether the destination address of the service is the address of a home user device. For example, if the destination address of the current service is the address of a home user device, the current service may be considered as having an east-west attribute; otherwise, the current service may be considered as having a north-south attribute.

In the embodiment of the present disclosure, the master device performs a corresponding bandwidth allocation operation based on whether the first service is an east-west service or a north-south service, so as to achieve bandwidth resource coordination between FTTR and FTTH, thereby enhancing the service deterministic service capability of the network.

For example, the OLT may configure multiple upstream channels with channel attributes for the slave device, so as to establish multiple upstream channels with channel attributes between the slave device and the master device, where the channel attribute may be an east-west attribute or a north-south attribute.

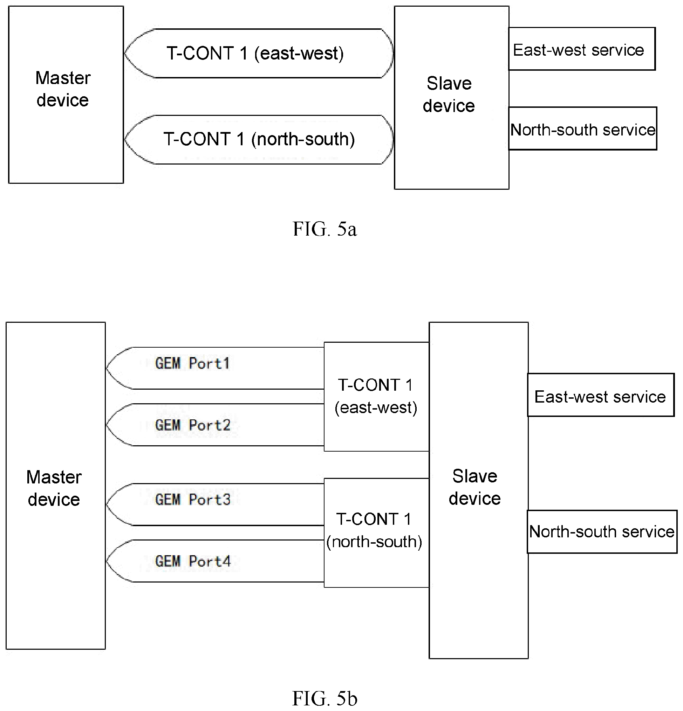

For example, the upstream channel may be a Transmission Container (T-CONT). Please refer to FIG. 5a, which is a schematic diagram of upstream channel construction provided by an embodiment of the present disclosure. As shown in FIG. 5a, multiple T-CONTs with channel attributes are established between the slave device and the master device, specifically T-CONT 1 and T-CONT 2, where the channel attribute of T-CONT 1 is an east-west attribute, and the channel attribute of T-CONT 2 is a north-south attribute.

For example, the upstream channel may be a Gigabit-Capable PON (GPON) Encapsulation Method port (GEM port). Please refer to FIG. 5b, which is another schematic diagram of upstream channel construction provided by an embodiment of the present disclosure. As shown in FIG. 5b, T-CONT 1 and T-CONT 2 are established between the slave device and the master device. T-CONT 1 includes GEM port 1 and GEM port 2, and T-CONT 2 includes GEM port 3 and GEM port 4. The channel attribute of T-CONT 1 is an east-west attribute, and the channel attributes of the included GEM port 1 and GEM port 2 are also east-west attributes. The channel attribute of T-CONT 2 is a north-south attribute, and the channel attributes of the included GEM port 3 and GEM port 4 are also north-south attributes. It can be understood that a GEM port is the smallest transmission unit for a service. One T-CONT may include multiple GEM ports, and the attribute of a GEM port matches the attribute of the T-CONT to which it belongs.

In the embodiments of the present disclosure, a slave device may, according to a service attribute of a service, map a bandwidth request corresponding to the service to an uplink channel with a matching attribute, so as to request allocation of upstream bandwidth via the upstream channel. After obtaining the bandwidth allocation, the slave device maps an upstream service frame corresponding to the service to the upstream channel with the matching attribute, and transmits the upstream service frame to a master device over the upstream channel using the allocated upstream bandwidth. For example, the slave device maps the bandwidth request of an east-west service to an upstream channel with an east-west attribute, and requests upstream bandwidth through the east-west attribute upstream channel. After obtaining the east-west bandwidth allocation, the slave device maps the upstream service frame of the east-west service to the upstream channel with the east-west attribute, and transmits the upstream service frame to the master device through the east-west attribute upstream channel. Alternatively, the slave device maps the bandwidth request of a north-south service to an upstream channel with a north-south attribute, and requests upstream bandwidth through the north-south attribute upstream channel. After obtaining the north-south bandwidth allocation, the slave device maps the upstream service frame of the north-south service to the upstream channel with the north-south attribute, and transmits the upstream service frame to the master device through the north-south attribute upstream channel. In the above process, the master device can also determine the service attribute of the upstream service frame based on the channel attribute of the upstream channel transmitting the upstream service frame.

It should be noted that the OLT configures multiple upstream channels with channel attributes for the slave device, and can also allocate specific bandwidth to each upstream channel. Each upstream channel transmits upstream frames through the allocated bandwidth. For example, the upstream frame may be a service data packet, a bandwidth request, or other service messages.

For example, the slave device sends a bandwidth request for a first service to the master device through a first upstream channel. Based on this, the process of determining the service attribute of the first service may include the following steps S121 and S122.

Step S121: Determining the channel attribute of the first upstream channel, where the channel attribute includes an east-west attribute or a north-south attribute.

Step S122: Determining that the service attribute of the first service is an east-west attribute based on the channel attribute of the first upstream channel being an east-west attribute; or, determining that the service attribute of the first service is a north-south attribute based on the channel attribute of the first upstream channel being a north-south attribute.

For example, when the master device receives a bandwidth request for a first service from a first upstream channel with an east-west attribute, and determines that the service attribute of the first service is an east-west attribute based on the channel attribute of the first upstream channel being an east-west attribute, the master device subsequently performs bandwidth allocation related operations for the first service by allocating east-west bandwidth.

For example, when the master device receives a bandwidth request for a first service from a first upstream channel with a north-south attribute, and determines that the service attribute of the first service is a north-south attribute based on the channel attribute of the first upstream channel being a north-south attribute, the master device subsequently performs bandwidth allocation related operations for the first service by allocating north-south bandwidth.

In an implementation, upon confirming that the first service is an east-west service, step S120, which involves performing bandwidth allocation related operations based on the service attribute of the first service, may include: allocating east-west bandwidth to the first service based on the service attribute of the first service being an east-west attribute.

In another implementation, upon confirming that the first service is an east-west service, step S120, which involves performing bandwidth allocation related operations based on the service attribute of the first service, may include: forwarding the bandwidth request for the first service to the optical line terminal (OLT) with a constant delay based on the service attribute of the first service being an east-west attribute, so that the OLT allocates east-west bandwidth to the first service according to the bandwidth request.

In the case where the first service is an east-west service, embodiments of the present disclosure provide two implementation methods for allocating east-west bandwidth to the first service. The first method involves the master device allocating east-west bandwidth to the first service, and the second method involves the OLT allocating east-west bandwidth to the first service. In the second implementation, the master device forwards the bandwidth request to the OLT with a constant delay through a locally constructed forwarding channel, enabling the OLT to allocate east-west bandwidth to the first service in response to the bandwidth request.

For example, allocating east-west bandwidth to the first service includes: determining the remaining bandwidth based on the total bandwidth of the master device and the used north-south bandwidth; and allocating east-west bandwidth to the first service from the remaining bandwidth.

It can be understood that the OLT can identify a north-south bandwidth requirement and allocate the north-south bandwidth based on the total bandwidth under the OLT. The OLT can also identify an east-west bandwidth requirement and allocate the east-west bandwidth on behalf of each master device. By combining north-south bandwidth allocation and subtracting the north-south bandwidth allocation related to the master device, east-west bandwidth allocation is performed based on the remaining bandwidth under the master device.

Upon confirming that the first service is a north-south service, step S120, which involves performing bandwidth allocation related operations based on the service attribute of the first service, may include: forwarding the bandwidth request for the first service to the OLT with a constant delay based on the service attribute of the first service being a north-south attribute, so that the OLT allocates north-south bandwidth to the first service according to the bandwidth request.

For bandwidth requests of north-south traffic, the master device forwards the bandwidth request to the OLT with a constant delay, and the OLT performs north-south bandwidth allocation for the north-south traffic.

The OLT can allocate north-south bandwidth for the FTTH segment to the first service from its own total bandwidth based on its own total bandwidth and the total bandwidth of the master device, and allocate north-south bandwidth for the FTTR segment to the first service from the total bandwidth of the master device.

It should be noted that when the OLT configures the upstream channel for the slave device, the OLT also allocates a fixed bandwidth to the upstream channel. When the slave device transmits the bandwidth request to the master device through the first upstream channel, and the master device forwards the bandwidth request to the OLT with a constant delay via the forwarding channel, the OLT can determine which upstream channel the bandwidth request originates from based on the bandwidth used for transmitting the bandwidth request. Subsequently, the OLT can determine whether the service currently requesting bandwidth is an east-west service or a north-south service based on the channel attribute of the upstream channel.

In a possible embodiment of the present disclosure, step S120, which involves performing bandwidth allocation related operations based on the service attribute of the first service, may further include: in the case of a connection failure with the OLT, ceasing to forward the bandwidth request for the first service to the OLT with a constant delay, and allocating bandwidth to the first service according to a preset bandwidth allocation rule.

In the case of a connection failure between the master device and the OLT, that is, when the master device loses communication with the OLT, the master device may allocate bandwidth to the first service according to a preset bandwidth allocation rule. For example, it could involve simple allocation, fixed allocation, or user participation, among others, and the master device stops forwarding bandwidth requests to the OLT.

For example, the embodiment of the present disclosure also includes: the master device forwards the bandwidth allocation result returned by the OLT to the slave device, enabling the slave device to obtain the allocated bandwidth.

The method provided by the embodiment of the present disclosure may further include the following steps S210-S230.

Step S210: Receiving a service packet of a second service sent by a home user device.

Step S220: Obtaining the destination address of the service packet.

Step S230: In the case where the destination address of the service packet belongs to a stored address of a home user device, determining that the service attribute of the service packet is an east-west attribute, determining a target slave device based on the destination address of the service packet, and forwarding the service packet to the target slave device via a first downstream channel, where the channel attribute of the first downstream channel is an east-west attribute.

For example, the first downstream channel may be a GEM port.

The OLT may configure one or more downstream channels for the master device to establish one or more downstream channels with an east-west attribute between the master device and the slave device. These downstream channels may be GEM ports. The master device maps the downstream service frame to a downstream channel with a matching attribute, so as to transmit the downstream service frame to the slave device via the downstream channel.

For example, after Step S220, the method of the embodiment of the present disclosure may further include the following Step S240.

Step S240: In the case where the destination address of the service packet does not belong to a stored address of a home user device, determining that the service attribute of the service packet is a north-south attribute, and forwarding the service packet to the OLT with a constant delay.

For example, the master device may locally construct a home user device address list for storing addresses of home user device. When receiving a service packet from a user device, the service attribute of the service packet can be determined based on whether the destination address in the service packet is stored in the home user device address list. If the master device can find the destination address in the locally stored home user device address list, it can be determined that the service attribute is an east-west attribute; otherwise, it is a north-south attribute.

Before Step S210, the method of the embodiment of the present disclosure may further include the following Steps S201 and S202.

Step S201: Obtaining and storing addresses of at least one home user device that has established a connection.

Step S202: Sending the addresses of the home user device to the slave device via a downstream notification message, so that the slave device stores the addresses of the home user device.

The master device may request addresses from home user device that have established connections, store the obtained addresses locally, and send the addresses of the home user device to the corresponding slave device via a downstream notification message, thereby sharing the learned home user device addresses with the slave device.

The following example illustrates the process. In an example of the present disclosure, the following Steps S301 to S305 are included.

Step S301: Master device 1 receives a connection request from Home user device 1, establishes a connection with Home user device 1, and obtains address1 of Home user device 1.

Step S302: Master device 1 stores address1 of Home user device 1 in a local home user device address list.

Step S303: Master device 1 generates a downstream notification message "Device_Address_Share_d", which carries Address 1 of Home user device 1.

Step S304: Master device 1 sends the downstream notification message "Device_Address_Share_d" to Slave device 1, Slave device 2, and slave device 3. Correspondingly, Slave device 1, Slave device 2, and Slave device 3 each receive the downstream notification message "Device_Address_Share_d" sent by Master device 1.

Step S305: Slave device 1, Slave device 2, and Slave device 3 each obtains Address 1 of Home user device 1 from "Device_Address_Share_d" and stores Address 1 of Home user device 1 in a local home user device address lists.

For example, the format of the downstream notification message "Device_Address_Share_d" can be referred to as shown in Table 1 below.

**Table 1**

| **Byte** | **Field** | **Description** |
|---|---|---|
| 1-2 | ONU-ID | Indicate the ONU-ID of all recipients of a broadcast message |
| 3 | Message Type ID | Value 0x20, indicating the "Device_Address_Share_d" message |
| 4 | SeqNo | 8-bit broadcast PLOAM message sequence number |
| 5-10 | Address | 6-byte MAC address |
| 11 | Source ONU-ID | A value of 0xFF indicates the master device, while other values indicate the ONU-ID of the slave device |
| 12-40 | Padding | Set to 0x00 by the transmitter and treated as "don't care" by the receiver |
| 41-48 | MIC | Indicate message integrity check using the default PLOAM integrity key |

Before Step S210, the method of the embodiment of the present disclosure may further include the following Steps S203 and S204.

Step S203: Receiving an upstream notification message sent by a slave device, where the upstream notification message carries the address of a home user device connected to the slave device.

Step S204: Storing the address of the home user device carried in the upstream notification message.

Step S205: Sending the address of the home user device to other slave devices, excluding the slave device which sent the upstream notification message, via a downstream notification message, so that the other slave devices store the address of the home user device.

The master device may receive the home user device address shared by a slave device through an upstream notification message and share the home user device address with other slave devices via a downstream notification message.

In an example of the present disclosure, the following steps S401-S408 are included.

Step S401: Slave device 1 receives a connection request from Home user device 2, establishes a connection with Home user device 2, and obtains Address 2 of Home user device 2.

Step S402: Slave device 1 stores Address 2 of Home user device 2 in a local home user device address list.

Step S403: Slave device 1 generates an upstream notification message "Device_Address_Share_u", which carries Address 2 of Home user device 2.

Step S404: Slave device 1 sends the upstream notification message "Device_Address_Share_u" to Master device 1. Correspondingly, Master device 1 receives the upstream notification message "Device_Address_Share_u" sent by Slave device 1.

Step S405: Master device 1 obtains Address 2 of Home user device 2 from the upstream notification message "Device_Address_Share_u" and stores Address 2 of Home user device 2 in a local home user device address list.

Step S406: Master device 1 generates a downstream notification message "Device_Address_Share_d", which carries Address 2 of Home user device 2.

Step S407: Master device 1 sends the downstream notification message "Device_Address_Share_d" to Slave device 2 and Slave device 3. Correspondingly, Slave device 2 and Slave device 3 respectively receive the downstream notification message "Device_Address_Share_d" sent by Master device 1.

Step S408: Slave device 2 and Slave device 3 respectively obtain Address 2 of Home user device 2 from the downstream notification message "Device_Address_Share_d" and store Address 2 of Home user device 2 in a local home user device address lists.

For example, the format of the upstream notification message "Device_Address_Share_u" may refer to Table II below.

**Table 2**

| **Byte** | **Field** | **Description** |
|---|---|---|
| 1-2 | ONU-ID | ONU-ID of the message sender |
| 3 | Message Type ID | Value 0x1F, indicating the "Device_Address_Share_u" message |
| 4 | SeqNo | Value is 0x00 |
| 5-10 | Address | 6-byte MAC address |
| 11 | Source ONU-ID | Indicate the ONU-ID of the slave device |
| 12-40 | Padding | Set to 0x00 by the transmitter, and treated as "don't care" by the receiver |
| 41-48 | MIC | Indicate message integrity check using the default PLOAM integrity key |

By way of example, the method of the embodiment of the present disclosure further includes: establishing a forwarding channel between the OLT and the slave device, where the forwarding channel is used to forward an upstream frame from the slave device to the OLT with a constant delay, or to forward a downstream frame from the OLT to the slave device with a constant delay. The forwarding channel is a PON-layer forwarding channel located between the OLT and the slave device. For example, an upstream frame may be an upstream service packet, a bandwidth request, or other upstream messages, and a downstream frame may be a downstream service packet, a bandwidth request response, or other downstream messages.

In an embodiment of the present disclosure, the following steps S501-S510 are included.

Step S501: Slave device 1 receives a service connection request for Service 1 sent by Home user device 2, where the service connection request carries the destination address of Service 1.

Step S502: Slave device 1 successfully retrieves the destination address of Service 1 in the local home user device address list, and determines that the service attribute of Service 1 is an east-west attribute.

Step S503: Slave device 1 sends a bandwidth request for Service 1 to Master device 1 via T-CONT 1 with the east-west attribute; correspondingly, Master device 1 receives the bandwidth request for Service 1 sent by Slave device 1 from T-CONT 1.

Step S504: Master device 1 determines that the service attribute of Service 1 is an east-west attribute based on the channel attribute of T-CONT 1 being the east-west attribute.

Step S505: Master device 1 allocates east-west bandwidth for Service 1 on the basis of north-south bandwidth allocation.

Step S506: Slave device 1 receives the service packet of Service 1 sent by Home user device 2.

Step S507: Slave device 1 uses the bandwidth reserved for Service 1 by T-CONT 1 to send the service packet of Service 1 to Master device 1; correspondingly, Master device 1 receives the service packet of Service 1 sent by Slave device 1 from T-CONT 1.

Step S508: Master device 1 determines that the service packet is of an east-west attribute based on the channel attribute of T-CONT 1 being the east-west attribute.

Step S509: Master device 1 determines that the destination slave device is Slave device 2 based on the destination address of the service packet.

Step S510: Master device 1 maps the service packet of Service 1 to the downstream channel GEM port 5, and forwards the service packet of Service 1 to Slave device 2 via GEM port 5, so as to forward the service packet of Service 1 to the home user device corresponding to the destination address through Slave device 2.

In an embodiment of the present disclosure, the following steps S601-S611 are included.

Step S601: Slave device 1 receives a service connection request for Service 1 sent by Home user device 2, where the service connection request carries the destination address of Service 1.

Step S602: Slave device 1 successfully retrieves the destination address of Service 1 in the local home user device address list, and determines that the service attribute of Service 1 is an east-west attribute.

Step S603: Slave device 1 sends a bandwidth request for Service 1 to Master device 1 via T-CONT 1 with the east-west attribute; correspondingly, Master device 1 receives the bandwidth request for Service 1 sent by Slave device 1 from T-CONT 1.

Step S604: Master device 1 determines that the service attribute of Service 1 is an east-west attribute based on the channel attribute of T-CONT 1 being the east-west attribute.

Step S605: Master device 1 forwards the bandwidth request to the FTTH OLT with a constant delay via the forwarding channel.

Step S606: Based on the north-south bandwidth allocation, the FTTH OLT allocates east-west bandwidth for Service 1 and sends the east-west bandwidth allocation result to the master device, so that the master device can forward the east-west bandwidth allocation result to Slave device 1.

Step S607: Slave device 1 receives the service packet of Service 1 sent by Home user device 2.

Step S608: Slave device 1 sends the service packet of Service 1 to Master device 1 using the east-west bandwidth reserved by T-CONT 1 for Service 1; correspondingly, Master device 1 receives the service packet of Service 1 sent by Slave device 1 from T-CONT 1.

Step S609: Master device 1 determines that the service packet is of an east-west attribute based on the channel attribute of T-CONT 1 being the east-west attribute.

Step S610: Master device 1 determines that the destination slave device is Slave device 2 based on the destination address of the service packet.

Step S611: Master device 1 maps the service packet of Service 1 to the downstream channel GEM port 5, and forwards the service packet of Service 1 to Slave device 2 via GEM port 5, so as to forward the service packet of Service 1 to the home user device corresponding to the destination address through Slave device 2.

In an embodiment of the present disclosure, the following steps S701-S710 are included.

Step S701: Slave device 1 receives a service connection request for Service 2 sent by Home user device 2, where the service connection request carries the destination address of Service 2.

Step S702: Slave device 1 fails to retrieve the destination address of Service 2 in the local home user device address list, and thus determines that the service attribute of Service 2 is a north-south attribute.

Step S703: Slave device 1 sends a bandwidth request for Service 2 to Master device 1 through T-CONT 2 with the north-south attribute; correspondingly, Master device 1 receives the bandwidth request for Service 2 sent by Slave device 1 from T-CONT 2.

Step S704: Master device 1 determines that the service attribute of Service 2 is a north-south attribute based on the channel attribute of T-CONT 2 being the north-south attribute.

Step S705: Master device 1 forwards the bandwidth request to the FTTH OLT with a constant delay via the forwarding channel.

Step S706: The FTTH OLT allocates north-south bandwidth for the FTTH segment from its own total bandwidth, and allocates north-south bandwidth for the FTTR segment from the total bandwidth of the master device for Service 2, based on its own total bandwidth and the total bandwidth of the master device. The FTTH OLT sends the north-south bandwidth allocation result to the master device, so that the master device forwards the north-south bandwidth allocation result to Slave device 1.

Step S707: Slave device 1 receives the service packet of Service 2 sent by Home user device 2.

Step S708: Slave device 1 sends the service packet of Service 2 to Master device 1 using the north-south bandwidth reserved for Service 2 by T-CONT 2; correspondingly, Master device 1 receives the service packet of Service 2 sent by Slave device 1 from T-CONT 2.

Step S709: Master device 1 determines that the service packet has a north-south attribute based on the channel attribute of T-CONT 2 being the north-south attribute.

Step S710: Master device 1 forwards the service packet of Service 2 to the FTTH OLT.

In an embodiment of the present disclosure, the following steps S801-S804 are included.

Step S801: Master device 1 receives the service packet of Service 3 sent by Home user device 1, where the service packet carries the destination address of Service 3.

Step S802: Master device 1 successfully retrieves the destination address of Service 3 in the local home user device address list, thereby determining that the service attribute of Service 3 is the east-west attribute.

Step S803: Master device 1 determines that the destination slave device is Slave device 2 based on the destination address of Service 3.

Step S804: Master device 1 maps the service packet of Service 3 to the downstream channel GEM port 6, and forwards the service packet of Service 3 to Slave device 2 through GEM port 6, so that Slave device 2 forwards the service packet of Service 3 to the home user device corresponding to the destination address.

In an embodiment of the present disclosure, the following steps S901-S903 are included.

Step S901: Master device 1 receives the service packet of Service 4 sent by Home user device 1, where the service packet carries the destination address of Service 4.

Step S902: Master device 1 fails to retrieve the destination address of Service 4 in the local home user device address list, thereby determining that the service attribute of Service 4 is the north-south attribute.

Step S903: Master device 1 forwards the service packet of Service 4 to the FTTH OLT.

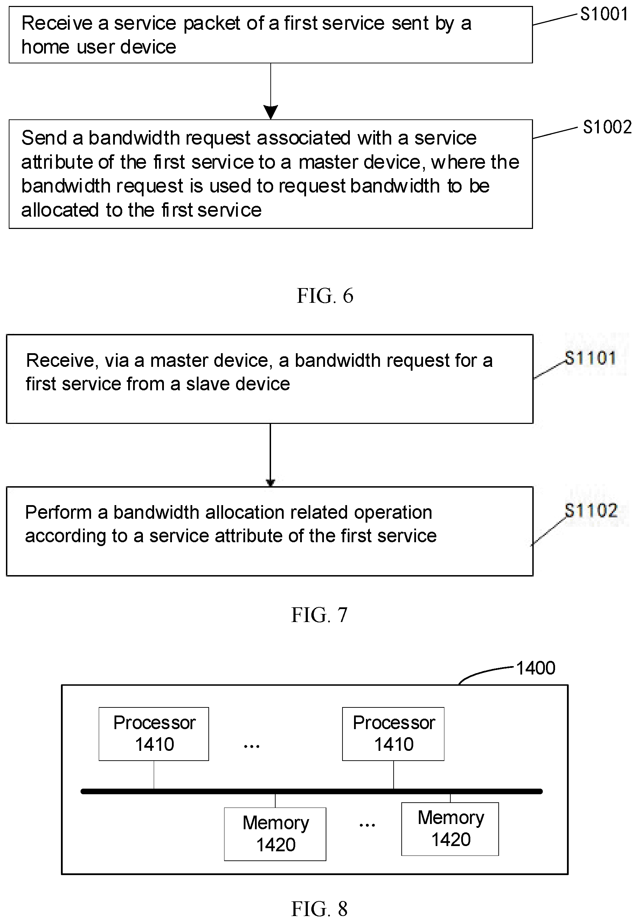

Please refer to FIG. 6, which is a schematic flowchart of a bandwidth allocation method provided in an embodiment of the present disclosure. The execution entity of the bandwidth allocation method may be the slave device in the implementation environment shown in FIG. 1 or FIG. 3. As shown in FIG. 6, the bandwidth allocation method may include, but is not limited to, the following steps S1001-S1002. Each step is described in sequence below.

Step S1001: Receiving a service packet of a first service sent by a home user device.

Step S1002: Sending a bandwidth request associated with a service attribute of the first service to a master device, where the bandwidth request is used to request bandwidth to be allocated to the first service.

For example, service attributes include an east-west attribute and north-south attribute.

In step S1002, sending a bandwidth request associated with the service attribute of the first service to the master device may include: in the case where the service attribute of the first service is an east-west attribute, sending the bandwidth request to the master device via a second upstream channel, where the channel attribute of the second upstream channel is an east-west attribute; or, in the case where the service attribute of the first service is a north-south attribute, sending the bandwidth request to the master device via a third upstream channel, where the channel attribute of the third upstream channel is a north-south attribute.

In step S1002, determining the service attribute of the first service may include: obtaining the destination address of the service packet of the first service; in the case where the destination address of the service packet belongs to a stored address of a home user device, determining that the service attribute of the service packet is an east-west attribute; or, in the case where the destination address of the service packet does not belong to a stored address of a home user device, determining that the service attribute of the service packet is a north-south attribute.

For example, the method of the embodiment of the present disclosure may further include: obtaining and storing addresses of at least one home user device which has established a connection; receiving a downstream notification message sent by the master device, where the downstream notification message carries an addresses of home user device which have established connections with other slave devices; storing the addresses of the home user device carried in the downstream notification message.

For example, the method of the embodiment of the present disclosure may further include: sending the address of the home user device to the master device via an upstream notification message, so that the master device stores the address of the home user device.

For example, the method of the embodiment of the present disclosure may further include: receiving a bandwidth allocation result sent by the master device; determining bandwidth allocated for the first service according to the bandwidth allocation result; and transmitting the first service using the bandwidth allocated for the first service.

Please refer to FIG. 7, which is a schematic flowchart of a bandwidth allocation method provided by an embodiment of the present disclosure. The execution entity of the bandwidth allocation method may be the OLT in the implementation environment shown in FIG. 1 or FIG. 3. As shown in FIG. 7, the bandwidth allocation method may include, but is not limited to, the following steps S1101-S1102. Each step is described in sequence below.

Step S1101: Receiving, via a master device, a bandwidth request for a first service from a slave device.

Step S1102: Performing a bandwidth allocation related operation according to a service attribute of the first service.

For example, the method of the embodiment of the present disclosure further includes: performing channel configuration on the slave device to construct multiple upstream channels with channel attributes on the slave device, where the channel attributes include an east-west attribute or a north-south attribute.

For example, the OLT may perform channel configuration on the master device or the slave device through a Downstream Physical Layer Operation, Administration and Maintenance (PLOAM) message "Assign_Alloc-ID". Based on the Assign_Alloc-ID message for allocating Alloc-ID/T-CONT, the north-south service attribute and the east-west service attribute are added. Among them, the Alloc-ID-type in the 7th byte adds two codes, 0x02 and 0x03, representing north-south service and east-west service respectively. The format of the Assign_Alloc-ID message can be referred to Table 3 below.

**Table 3**

| **Byte** | **Field** | **Description** |
|---|---|---|
| 1-2 | ONU-ID | Direct the message to a specific ONU or is a broadcast message for contention-based Alloc-ID assignment. As a broadcast message, ONU-ID = 0x03FF. |
| 3 | Message Type ID | A value of 0x0A identifies the "Assign_Alloc-ID" message. |
| 4 | SeqNo | An 8-bit unicast or broadcast PLOAM sequence number, with the value determined based on actual conditions. |
| 5-6 | Alloc-ID Value | 14 bits, aligned to the least significant end. The most significant bit is set to 0 by the transmitter and is treated as "don't care" by the receiver. |
| 7 | Alloc-ID Type | 0x01: XGEM encapsulated payload. |
| | | 0x02: XGEM encapsulated payload for access service. |
| | | 0x03: XGEM encapsulated payload for home interconnect service. |
| | | 0xFF: Deallocate Alloc-ID. |
| | | Other values are reserved. |
| 8-9 | Alloc-ID range | Bitmap indicates UWLCH ID; |
| | | The 8th byte indicates the MSB, UWLCH ID = 1111; |
| | | The 9th byte indicates the LSB, UWLCH ID = 0000. |
| | | A bit value of 1 indicates that the specified Alloc-ID is invalid in the corresponding upstream wavelength channel. Usually, OLT CT allocation includes the OLT-ID range for all upstream wavelength channels in the TWDM system. Allocations with narrow ranges require further study. If an ONU is invalid in a given upstream wavelength channel, it does not respond to the allocation of a directed Alloc-ID. |
| | | OLT CT should coordinate the allocation of Alloc-IDs to ensure that each unique Alloc-ID is assigned to at most one contention-based function, or to at most one ONU in the TWDM PON system. |
| | | In a fixed-wavelength TDM system using the default UWLCH ID of 1111, this field is set to 0x7F. |
| 10 | Contention Function Network Element ID | In the broadcast message for contention-based Alloc-ID allocation. In directed messages, set to 0x00 by the sender and ignored by the receiver. |
| 11-18 | Network element parameters for the contention function | In the broadcast message for contention-based Alloc-ID allocation. In directed messages, set to 0x00 by the sender and ignored by the receiver. |
| 19-40 | Padding | Set to 0x00 by the sender; treated as "don't care" by the receiver. |
| 41-48 | MIC | Message integrity check, computed using the ONUspecific derived shared PLOAM integrity key (for directed messages) or the default PLOAM integrity key (for broadcast messages). |

For example, the slave device sends a bandwidth request for the first service to the master device through the first upstream channel, so that the master device forwards the bandwidth request to the OLT with a constant delay.

For example, determining the service attribute of the first service may include: determining the channel attribute of the first upstream channel; determining that the service attribute of the first service is the east-west attribute based on the channel attribute of the first upstream channel being the east-west attribute; or, determining that the service attribute of the first service is the north-south attribute based on the channel attribute of the first upstream channel being the north-south attribute.

For example, performing bandwidth allocation related operations based on the service attribute of the first service may include: based on the service attribute of the first service being the east-west attribute, allocating east-west bandwidth for the first service, and forwarding the bandwidth allocation result to the slave device via the master device; based on the service attribute of the first service being the north-south attribute, allocating north-south bandwidth for the first service, and forwarding the bandwidth allocation result to the slave device via the master device.

For example, allocating east-west bandwidth for the first service may include: determining the remaining bandwidth based on the total bandwidth of the master device and the used north-south bandwidth; allocating east-west bandwidth for the first service from the remaining bandwidth.

For example, allocating north-south bandwidth for the first service may include: allocating north-south bandwidth for the first service based on its own total bandwidth and the total bandwidth of the master device.

An embodiment of the present disclosure further provides a communication device. As shown in FIG. 8, the communication device 1400 includes: one or more processors 1410; a memory 1420; one or more programs stored on the memory 1420, which, when executed by the one or more processors 1410, cause the one or more processors 1410 to implement: a bandwidth allocation method applied to a master device; or, a bandwidth allocation method applied to a slave device; or, a bandwidth allocation method applied to an OLT.

The memory 1420, as a non-transitory computer-readable medium, may be used to store non-transitory software programs and non-transitory computer-executable programs. Furthermore, the memory 1420 may include high-speed random access memory and may also include non-volatile memory, such as at least one disk storage device, flash memory device, or other non-volatile solidstate storage device. In some implementations, the memory 1420 may be remotely located relative to the processor 1410, and the remotely located memory 1420 may be connected to the processor 1410 via a network. Examples of the aforementioned network include, but are not limited to, the Internet, intranets, local area networks, mobile communication networks, and combinations thereof.

The memory 1420 may be implemented in forms such as read-only memory (ROM), static storage devices, dynamic storage devices, or random access memory (RAM). The memory 1420 may store operating systems and other application programs. When implementing the technical scheme provided by the embodiments of the present disclosure through software or firmware, the relevant program codes are stored in the memory 1420 and executed by the processor 1410 to invoke the method of the embodiments of the present disclosure.

The processor 1410 may be implemented using a general-purpose CPU (Central Processing Unit), a microprocessor, an application-specific integrated circuit (ASIC), or one or more integrated circuits, and is configured to execute relevant programs to implement the technical scheme provided by the embodiments of the present disclosure.

In some embodiments, the communication device further includes: an input/output interface for implementing information input and output; a communication interface for implementing communication interaction between the device and other devices, which may be achieved through wired means (e.g., USB, network cable, etc.) or wireless means (e.g., mobile network, WIFI, Bluetooth, etc.); a bus for transmitting information among various components of the device (e.g., the processor 1410, the memory 1420, the input/output interface, and the communication interface); where the processor 1410, the memory 1420, the input/output interface, and the communication interface may be communicatively connected within the device via the bus.

An embodiment of the present disclosure further provides a computer-readable storage medium, storing computer-executable instructions, where the computer-executable instructions are configured to be executed and implement: a bandwidth allocation method applied to a master device; or, a bandwidth allocation method applied to a slave device; or, a bandwidth allocation method applied to an OLT.

An embodiment of the present disclosure further provides a computer program product, including a computer program or computer instructions, where the computer program or computer instructions are stored in a computer-readable storage medium; a processor of a computer device reads the computer program or computer instructions from the computer-readable storage medium, and the processor executes the computer program or computer instructions, causing the computer device to execute and implement: a bandwidth allocation method applied to a master device; or, a bandwidth allocation method applied to a slave device; or, a bandwidth allocation method applied to an OLT.

The system architecture and application scenarios described in the embodiments of the present disclosure are intended to illustrate the technical scheme of the embodiments of the present disclosure more clearly and do not constitute limitations on the technical scheme provided by the embodiments of the present disclosure. Those skilled in the art will appreciate that, with the evolution of system architectures and the emergence of new application scenarios, the technical scheme provided by the embodiments of the present disclosure is equally applicable to similar technical problems.

Those having ordinary skill in the art may understand that all or part of the processes for implementing the methods in the above embodiments can be accomplished by instructing relevant hardware through a computer program. Such a computer program may be stored in a non-volatile computer-readable storage medium, and when executed, may include the processes of the embodiments of the aforementioned methods. Herein, any reference to memory, storage, database, or other medium used in the various embodiments provided by the present disclosure may include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms, such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), Rambus direct RAM (RDRAM), direct Rambus dynamic RAM (DRDRAM), and Rambus dynamic RAM (RDRAM), among others.

Those having ordinary skill in the art may understand that all or some of the steps and systems in the methods disclosed above can be implemented as software, firmware, hardware, and appropriate combinations thereof. Some or all of the physical components may be implemented as software executed by a processor, such as a central processing unit, digital signal processor, or microprocessor, or as hardware, or as an integrated circuit, such as an application-specific integrated circuit. Such software may be distributed on computer-readable media, which may include computer storage media (or non-transitory media) and communication media (or transitory media). As is well known to those having ordinary skill in the art, the term "computer storage media" includes volatile and non-volatile, removable and non-removable media implemented in any method or technology for storing information, such as computer-readable instructions, data structures, program modules, or other data. Computer storage media include, but are not limited to, RAM, ROM, EEPROM, flash memory or other memory technology, CD-ROM, digital versatile disc (DVD) or other optical storage, magnetic cassettes, magnetic tape, magnetic disk storage or other magnetic storage devices, or any other medium that can be used to store desired information and can be accessed by a computer. Furthermore, it is well known to those having ordinary skill in the art that communication media typically embody computer-readable instructions, data structures, program modules, or other data in a modulated data signal such as a carrier wave or other transmission mechanism, and can include any information delivery media.

Some embodiments of the present disclosure have been described above with reference to the accompanying drawings, which should not be construed as limiting the scope of claims of the present disclosure. Any modifications, equivalent substitutions, and improvements made by those skilled in the art without departing from the scope and essence of the present disclosure shall fall within the scope of claims of the present disclosure.

## Claims

1. A bandwidth allocation method, which is applied to a master device, the method comprising:
receiving a bandwidth request for a first service sent by a slave device; and
performing a bandwidth allocation related operation according to a service attribute of the first service.

2. The method according to claim 1, wherein the bandwidth request for the first service is sent by the slave device to the master device via a first upstream channel; and
the service attribute of the first service is determined through the following steps:
determining a channel attribute of the first upstream channel, wherein the channel attribute comprises an east-west attribute or a north-south attribute; and
determining that the service attribute of the first service is the east-west attribute according to the channel attribute of the first upstream channel being the east-west attribute; or, determining that the service attribute of the first service is the north-south attribute according to the channel attribute of the first upstream channel being the north-south attribute.

3. The method according to claim 2, wherein performing the bandwidth allocation related operation according to the service attribute of the first service comprises:
allocating an east-west bandwidth to the first service according to the service attribute of the first service being the east-west attribute; or
forwarding the bandwidth request for the first service to an optical line terminal (OLT) with a constant delay according to the service attribute of the first service being the east-west attribute, such that the OLT allocates the east-west bandwidth to the first service based on the bandwidth request, and forwarding a bandwidth allocation result returned by the OLT to the slave device.

4. The method according to claim 3, wherein allocating the east-west bandwidth to the first service comprises:
determining a remaining bandwidth according to a total bandwidth of the master device and a used north-south bandwidth; and
allocating the east-west bandwidth to the first service from the remaining bandwidth.

5. The method according to claim 2, wherein performing the bandwidth allocation related operation according to the service attribute of the first service comprises:
forwarding the bandwidth request for the first service to the OLT with a constant delay according to the service attribute of the first service being the north-south attribute, such that the OLT allocates a north-south bandwidth to the first service based on the bandwidth request; and
forwarding a bandwidth allocation result returned by the OLT to the slave device.

6. The method according to any one of claims 3 to 5, wherein performing the bandwidth allocation operation according to the service attribute of the first service further comprises:
in response to a failure of connection to the OLT, stopping forwarding the bandwidth request for the first service to the OLT with a constant delay, and allocating bandwidth to the first service according to a preset bandwidth allocation rule.

7. The method according to claim 1, further comprising:
receiving a service packet of a second service sent by a home user device;
obtaining a destination address of the service packet; and
in response to the destination address of the service packet belonging to a stored address of a home user device, determining that a service attribute of the service packet is an east-west attribute, determining a target slave device according to the destination address of the service packet, and forwarding the service packet to the target slave device through a first downstream channel, wherein a channel attribute of the first downstream channel is the east-west attribute.

8. The method according to claim 7, wherein after obtaining the destination address of the service packet, the method further comprises:
in response to the destination address of the service packet not belonging to a stored address of a home user device, determining that a service attribute of the service packet is a north-south attribute, and forwarding the service packet to the OLT.

9. The method according to claim 7, wherein before receiving the service packet of the second service sent by the home user device, the method further comprises:
obtaining and storing an address of at least one connected home user device; and
sending the address of the home user device to the slave device through a downstream notification message, so that the slave device stores the address of the home user device.

10. The method according to claim 7, wherein before receiving the service packet of the second service sent by the home user device, the method further comprises:
receiving an upstream notification message sent by the slave device, wherein the upstream notification message carries an address of a home user device which has established a connection with the slave device;
storing the address of the home user device carried in the upstream notification message; and
sending the address of the home user device to other slave devices, except the slave device which sent the upstream notification message, through a downstream notification message, so that the other slave devices store the address of the home user device.

11. The method according to claim 1, further comprising:
establishing a forwarding channel between the OLT and the slave device, wherein the forwarding channel is used to forward upstream frames from the slave device to the OLT with a constant delay.

12. A bandwidth allocation method, which is applied to a slave device, the method comprising:
receiving a service packet of a first service sent by a home user device; and
sending a bandwidth request associated with a service attribute of the first service to a master device, wherein the bandwidth request is used to request bandwidth to be allocated to the first service.

13. The method according to claim 12, wherein the service attribute comprises an east-west attribute and a north-south attribute; and
sending the bandwidth request associated with the service attribute of the first service to the master device comprises:
in response to the service attribute of the first service being an east-west attribute, sending the bandwidth request to the master device via a second upstream channel, wherein a channel attribute of the second upstream channel is the east-west attribute; and
in response to the service attribute of the first service being a north-south attribute, sending the bandwidth request to the master device via a third upstream channel, wherein a channel attribute of the third upstream channel is the north-south attribute.

14. The method according to claim 12, wherein the service attribute of the first service is determined through the following steps, comprising:
obtaining a destination address of a service packet of the first service;
in response to the destination address of the service packet belonging to a stored address of a home user device, determining that a service attribute of the service packet is an east-west attribute; and
in response to the destination address of the service packet not belonging to a stored address of a home user device, determining that the service attribute of the service packet is a north-south attribute.

15. The method according to claim 13 or 14, further comprising:
obtaining and storing an address of at least one connected home user device;
receiving a downstream notification message sent by the master device, wherein the downstream notification message carries an address of a home user device establishing a connection with another slave device; and
storing the address of the home user device carried in the downstream notification message.

16. The method according to claim 15, further comprising:
sending the address of the home user device to the master device through an upstream notification message, so that the master device stores the address of the home user device.

17. The method according to claim 15, further comprising:
receiving the bandwidth allocation result sent by the master device;
determining bandwidth to be allocated to the first service according to the bandwidth allocation result; and
transmitting the first service by utilizing the bandwidth to be allocated to the first service.

18. A bandwidth allocation method, which is applied to an optical line terminal (OLT), comprising:
receiving, from a master device, a bandwidth request for a first service from a slave device; and
performing a bandwidth allocation related operation according to a service attribute of the first service.

19. The method according to claim 18, further comprising:
performing channel configuration on the slave device to construct a plurality of upstream channels with channel attributes in the slave device, wherein the channel attributes include an east-west attribute or a north-south attribute.

20. The method according to claim 19, wherein the bandwidth request for the first service is sent by the slave device to the master device through a first upstream channel, so that the master device forwards the bandwidth request to the OLT with a constant delay; and
the service attribute of the first service is determined through the following steps, comprising:
determining a channel attribute of the first upstream channel; and
determining that the service attribute of the first service is the east-west attribute according to the channel attribute of the first upstream channel being the east-west attribute; or, determining that the service attribute of the first service is the north-south attribute according to the channel attribute of the first upstream channel being the north-south attribute.

21. The method according to claim 20, wherein performing the bandwidth allocation related operation according to the service attribute of the first service comprises:
allocating east-west bandwidth to the first service according to the service attribute of the first service being the east-west attribute, and forwarding the bandwidth allocation result to the slave device through the master device; and
allocating north-south bandwidth to the first service according to the service attribute of the first service being the north-south attribute, and forwarding the bandwidth allocation result to the slave device through the master device.

22. The method according to claim 21, wherein allocating the east-west bandwidth to the first service comprises:
determining a remaining bandwidth according to a total bandwidth of the master device and a used north-south bandwidth; and
allocating the east-west bandwidth to the first service from the remaining bandwidth.

23. The method according to claim 21, wherein allocating the north-south bandwidth to the first service comprises:
allocating north-south bandwidth to the first service according to its own total bandwidth and a total bandwidth of the master device.

24. A communication device, comprising:
one or more processors; and
a memory, having one or more programs stored thereon, which, when executed by the one or more processors, cause the one or more processors to implement:
the bandwidth allocation method according to any one of claims 1 to 11;
the bandwidth allocation method according to any one of claims 12 to 17; or
the bandwidth allocation method according to any one of claims 18 to 23.

25. A computer-readable storage medium, having a computer program stored thereon, wherein the computer program, when executed by a processor, implements:
the bandwidth allocation method according to any one of claims 1 to 11;
the bandwidth allocation method according to any one of claims 12 to 17; or
the bandwidth allocation method according to any one of claims 18 to 23.
